# EUROPEAN PATENT SPECIFICATION

(11) **EP 3 726 411 B1**
(45) Date of publication and mention of the grant of the patent: **01.05.2024**
(21) Application number: 18888713.7
(22) Date of filing: 12.12.2018
(51) Int. Cl.: G06F 21/62

(54) **DATA DESENSITISING METHOD, SERVER, TERMINAL, AND COMPUTER-READABLE STORAGE MEDIUM**
VERFAHREN ZUR DATENDESENSIBILISIERUNG, SERVER, ENDGERÄT UND COMPUTERLESBARES SPEICHERMEDIUM
PROCÉDÉ DE DÉSENSIBILISATION DE DONNÉES, SERVEUR, TERMINAL ET SUPPORT DE STOCKAGE LISIBLE PAR ORDINATEUR

(30) Priority: 14.12.2017 CN 201711341969
(43) Date of publication of application: 21.10.2020
(73) Proprietor: ZTE Corporation, shenzhen Guangdong 518057 (CN)
(72) Inventor: NIU, Jiahao, Shenzhen, Guangdong 518057 (CN); ZHANG, Qiang, Shenzhen, Guangdong 518057 (CN); XU, Jin, Shenzhen, Guangdong 518057 (CN)
(74) Representative: WBH Wachenhausen Patentanwälte PartG mbB
(86) International application number: PCT/CN2018/120705
(87) International publication number: WO 2019/114766

(56) References cited:
- CN-A- 105 515 963
- CN-A- 106 528 683
- CN-A- 106 599 713
- CN-A- 107 241 360
- CN-A- 107 392 051
- US-A1- 2009 100 527
- US-A1- 2015 200 967
- "Automated Discovery And Masking Of Sensitive Data ED - Darl Kuhn", IP.COM, IP.COM INC., WEST HENRIETTA, NY, US, 21 January 2015 (2015-01-21), XP013166178, ISSN: 1533-0001

## Description

### Field of the Invention

The present disclosure relates to the field of data security, and in particular, to a data desensitizing method, a server, a terminal, and a computer-readable storage medium.

### Background of the Invention

With the rapid development of the mobile Internet, an explosive growth of the amount of information in the network is presented. However, more and more sensitive information is exposed in search engine results due to deficiencies of a network application itself and administrative negligence. In addition to conventional means such as user authentication and access authority control, it is also important for protecting privacy to perform desensitization processing to sensitive data in a search result.

A relevant data desensitization solution is mainly used for desensitization of relational database products, and a data desensitization server device needs to be deployed in this method. A data access request from a client terminal is received by a data desensitization server; a desensitized data access request is sent to a database, so that the database can query and obtain querying result data according to the access request; and after the result data is returned to the desensitization server, the desensitization server parses a source data access request, determines whether the request contains a sensitive field, performs desensitization processing to the returned result data according to a preset rule if the sensitive field is contained, and sends processed data to a request terminal. A disadvantage of the relevant solution is that a special desensitization intermediate device, i.e., an external data desensitization server, is required, which increases costs and complexity of software and hardware and has high operation and maintenance costs. Moreover, querying of a request and returning of a result both need to be implemented by means of the desensitization intermediate device, which consumes a large amount of network bandwidth and calculation and storage resources. Thus, the performance is poor, and the concurrent degree is not high. In the case of a very large amount of data, requirements for the response time of high-performance desensitization cannot be met by the manner of using an intermediate device US 2009/100527 A1, US 2015/200967 A1 and "Automated Discovery And Masking Of Sensitive Data ED - Darl Kuhn",IP.COM, IP.COM INC., WEST HENRIETTA, NY, US, 21 January 2015 (2015-01-21), XP013166178,ISSN: 1533-0001 constitute relevant prior art to understand the invention and which have been used to draft the Extended European Search Report.

### Summary of the Invention

The invention is defined by the appended claims. Preferred embodiments are defined in the dependent claims. The invention is specified in the named Third Embodiment; the named first, second, fourth and fifth embodiments serve as examples.

Embodiments of the present disclosure provide a data desensitizing method, a server, a terminal, and a computer-readable storage medium, and it is intended to solve the problems of high software and hardware costs and long response time of a search engine data desensitizing process in related technologies.

In order to solve the above technical problems, an embodiment of the present disclosure provides a data desensitizing method, applied to a mobile terminal. The method includes:
receiving a data search request initiated by a client terminal;
searching for data records meeting criteria on the basis of the data search request;
determining a desensitization policy by means of an inbuilt desensitization plug-in;
performing a desensitizing operation to the data records on the basis of the desensitization policy so as to generate a desensitized search result; and
sending the search result to the client terminal.

Moreover, an embodiment of the present disclosure provides a server. The server includes: a first processor, a first memory, a desensitization plug-in, and a first communication bus; the first communication bus is configured to realize communication connection among the first processor, the first memory, and the desensitization plug-in; and the first processor is configured to execute a data desensitization program stored in the first memory so as to implement steps of the above data desensitizing method.

Furthermore, an embodiment of the present disclosure provides a terminal. The terminal includes: a second processor, a second memory, and a second communication bus; the second communication bus is configured to realize communication connection between the second processor and the second memory; and the second processor is configured to execute a data desensitization program stored in the second memory so as to implement steps of the above data desensitizing method.

In addition, an embodiment of the present disclosure provides a computer-readable storage medium. One or more computer programs are stored in the computer-readable storage medium, and the one or more computer programs are executable by one or more processors so as to implement steps of the data desensitizing method.

The present disclosure has the following beneficial effects.

The present disclosure provides a data desensitizing method, a server, a terminal, and a computer-readable storage medium, for solving the problems of high software and hardware costs and long response time of a search engine data desensitizing process in related technologies, desensitizing operations being performed by a desensitization plug-in directly built in the server. The method may, for example, include: receiving, by a server, a data search request initiated by a client terminal; searching for data records meeting criteria on the basis of the data search request; determining a desensitization policy by means of an inbuilt desensitization plug-in; performing a desensitizing operation to the data records on the basis of the desensitization policy so as to generate a desensitized search result; and sending the search result to the client terminal. By implementation of the present disclosure, desensitization of data is realized by using a desensitization plug-in in a search engine server, so that software and hardware costs can be reduced and a system response time can be reduced as well.

Other features and corresponding beneficial effects of the present disclosure are set forth in the description which follows, and it should be understood that at least some of the beneficial effects will become apparent from the recitation of the description of the present disclosure.

### Brief Description of the Drawings

Fig. 1 is a flowchart of a data desensitizing method according to a first embodiment of the present disclosure;
Fig. 2 is a schematic diagram of components of a search system in various embodiments of the present disclosure;
Fig. 3 is a flowchart of a data desensitizing method according to a second embodiment of the present disclosure;
Fig. 4 is a flowchart of a data desensitizing method according to a third embodiment of the present disclosure;
Fig. 5 is a schematic diagram of a flowchart of a data desensitizing method according to a fourth embodiment of the present disclosure;
Fig. 6 is a schematic diagram of components of a data desensitization system and a flowchart according to the fourth embodiment of the present disclosure;
Fig. 7 is a schematic diagram of components of a server according to a fifth embodiment of the present disclosure; and
Fig. 8 is a schematic diagram of components of a terminal according to the fifth embodiment of the present disclosure.

### Detailed Description of the Embodiments

In order to make the objective, technical solutions, and advantages of the present disclosure clearer, embodiments of the present disclosure will be described further in detail below through specific implementation manners with reference to the accompanying drawings. It should be understood that specific embodiments described herein are merely used for explaining the present disclosure and are not intended to limit the present disclosure.

### First Embodiment

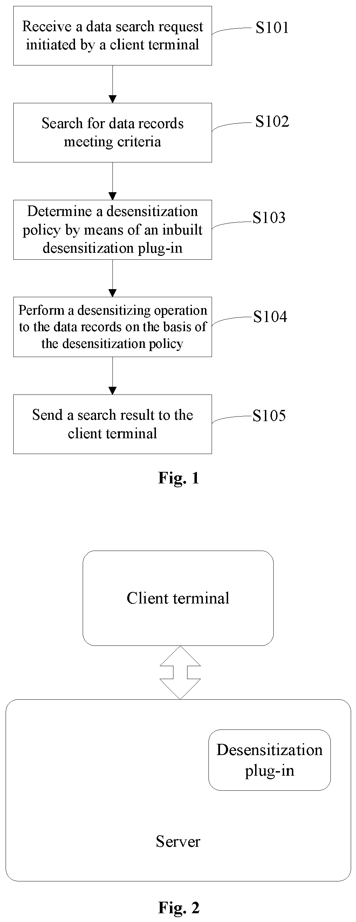

Referring to Fig. 1, and Fig. 1 shows a flowchart of a data desensitizing method according to a first embodiment of the present disclosure. Fig. 2 is a schematic diagram of components of a search system relevant to various embodiments of the present disclosure. The search system includes a search engine server and a client terminal, and a desensitization plug-in is built in the server. The data desensitizing method in the present embodiment may, for example, include:
S 101: receiving a data search request initiated by a client terminal;
S102: searching for data records meeting criteria on the basis of the data search request;
S103: determining a desensitization policy by means of an inbuilt desensitization plug-in;
S104: performing a desensitizing operation to the data records on the basis of the desensitization policy so as to generate a desensitized search result; and
S105: sending the search result to the client terminal.

Search engine is a system that collects information from the Internet by using a specific computer program according to a certain policy, provides a retrieval service for a user after organizing and processing the information, and displays the information to the user, which is relevant to retrieval of the user. The search engine includes full-text index, catalog index, meta search engine, vertical search engine, aggregated search engine, portal search engine, free link list, and the like. In terms of function of the search engine, the search engine generally includes four parts, i.e., spider, indexer, searcher and user interface. The spider functions to roam in the Internet so as to discover and collect information; the indexer functions to understand the information searched by the spider and extract index items therefrom for representing documents and generating an index table of a document library; the searcher functions to quickly retrieve documents in an index library according to a query of the user, perform relevance evaluation, sort results to be output, and reasonably feedback information according to a query request of the user; the user interface functions to provide user interaction such as to accept the query of the user and display a query result so as to provide the user with personalized query items. Among these functions of the search engine, the spider, the indexer, and the searcher are all provided on the server side and interact with the client terminal side via the user interface. The current mainstream open-source search engines include ElasticSearch and Apache Solr. ElasticSearch is an open-source, distributed, RESTful (representational state transfer) search engine constructed on the basis of Lucene (full-text search engine), and data is indexed by using JSON (JavaScript Object Notation) through HTTP (HyperText Transfer Protocol). Apache Solr is an open-source search server, and Solr is a high-performance Lucene-based full-text search server. A document is added to a search set by using XML (extensible markup language) through HTTP, and querying the set is realized by receiving an XML/JSON response through HTTP as well.

In the result searched by the search engine, there may be sensitive information, for example, information relevant to the account password information and the IP address of the client terminal, which should not be directly obtained by an access user. In this case, it needs to perform desensitization processing to the information. The so-called desensitization processing means that data deformation is performed to the sensitive information according to a desensitization rule to realize reliable protection to sensitive privacy data. In the case that user security data or some commercial sensitive data are related to, modification is performed to the real data. For example, it needs to perform desensitization processing to personal information such as the ID card number, the mobile phone number, the card number, and the client number. After data is desensitized, a desensitized real data set may be used safely. When the user searches by means of the search engine, relevant obtained sensitive information is desensitized content, and the user does not actually learn the specific content of the data, so that information security can be ensured.

At S101, a data search request initiated by a client terminal is received. A data search request initiated by a client terminal may, for example, include a data search request to a search engine server directly initiated by an application, a program, a command, or a script at the client terminal of the search engine, and subsequently requirements of the client terminal are processed directly by the search engine server. For a current data search request, a search engine node that receives the data search request from the client terminal serves as a master node of the current data search request.

At S102, data records meeting criteria are searched on the basis of the data search request. It is a process that the search engine server searches corresponding data according to the data search request. Determining, by the search engine server, relevant information on the basis of related information of the corresponding data in the data search request, such as a keyword of the data, a classification type of the data, and a release time of the data may, for example, be included.

In the present embodiment, the step of searching for data records meeting criteria on the basis of the data search request may, for example, include: parsing the data search request and determining index sharding information; creating a distributed search task on the basis of the index sharding information; and performing a parallel search according to the distributed search task. A data search request initiated by a user may include a large amount of data, and object content searched by the search engine server may include a larger amount of data. In order to improve the search efficiency, the index sharding information may be determined by parsing the data search request, and then a distributed search task is constructed on the basis of the index sharding information. The so-called distributed search task means dividing a problem, which may be solved by involving a large amount of computing power, into a number of small parts, then allocating these parts to a number of computers for processing, and finally integrating these calculation results to obtain a final result. In other words, the relevant search engine server in the present embodiment may include multiple servers. In addition to a server for receiving a client terminal request which serves as a master node, other servers functioning as execution bodies for a distributed search serve as processing nodes of the current data search request. However, in fact, hardware components of these servers may be consistent. A server serving as a processing node in the current data search request may also serve as a master node in a next data search request. The present embodiment is not limited thereto.

Performing a parallel search according to a distributed search task refers to performing a parallel search for records meeting criteria by respective processing nodes on the basis of the index sharding information. Acquiring a current data search scope according to the sharding information and searching for records meeting criteria may, for example, be included. The index sharding information is relevant with the matter that information such as the data search scope is divided according to the data search request in order to implement distributed and parallel processing. Specifically, data search scopes of respective processing nodes are at least partially different, so that search efficiency is improved while the comprehensive search is performed.

At S103, a desensitization policy is determined by means of an inbuilt desensitization plug-in. In the present embodiment, the desensitization processing to the data records is realized by directly building a desensitization plug-in in the search engine server, instead of by additionally providing a desensitization server to perform data desensitization, which has advantages of improving desensitization efficiency and reducing hardware and software costs of a system as well. Exemplarily, in the present embodiment, the data search request may further include identity information corresponding to the client terminal. In this case, the step of determining a desensitization policy by means of an inbuilt desensitization plug-in may, for example, include invoking an interface of the desensitization plug-in according to the identity information so as to acquire a desensitization policy corresponding to the identity information. In the present embodiment, different desensitization policies may be adopted for different users. For instance, when granularity controlled by the desensitization policy is at a level of field, different desensitization rules may be set according to an authority level of a user. For example, for the field of the identity card, a rule of desensitizing the last four digits may be set for a user with a high authority level, while a rule of desensitizing the entirety may be set for a user with a low authority level; and for the field of the telephone number, a rule of desensitizing the middle four digits may be set for the user with a high authority level, while a rule of desensitizing the entirety may be set for the user with a low authority level. By setting various desensitizing policies, security of the sensitive information can be further improved to a certain extent, and leakage of the sensitive information can be avoided.

In the present embodiment, setting of the desensitization plug-in may be performed through a configuration file. Exemplarily, before a desensitization request initiated by the client terminal is received, configuring the desensitization plug-in through a configuration file and placing the desensitization plug-in in a corresponding execution environment may further be included.

Alternatively, steps of loading and effecting the desensitization plug-in in the Solr engine may be as follows.

Step 1: A desensitization plug-in is configured through a configuration file; a parameter "requestHandler" is configured in the file "solrconfig.xml"; and the engine Solr querys and executes "maskingComponent" through the following configurations.

For the same "request handler", a plurality of search components may be configured in sequence. These components obtain their own tasks from a class "handler", and pass a SolrQueryRequest and a SolrQueryResponse on. In the present embodiment, a plug-in "maskingComponent" is inserted in this process to customize a desensitization flow of search result.

```
    <requestHandler >
      <arr name="components">
          <str>query</ str>
          <str>maskingComponent</str>
       </arr>
    </requestHandler>
```

At the same time, a tag "maskingComponent" is added to execute a corresponding desensitization processing plug-in; and

```
    <searchComponent name="maskingComponent" class=desensitization plug-in
    package name"/>.
```

Step 2: After the configuration file is modified, a corresponding desensitization plug-in "jar package" is put into a folder "lib" in the Solr execution environment.

Step 3: The Solr is restarted to make configurations of the desensitization plug-in effective.

In addition, when a desensitization function is not necessary, the desensitization plug-in may be uninstalled.

Alternatively, steps of loading and effecting the desensitization plug-in in the engine ElasticSearch may be as follows.

Step 1: After development of a user-defined plug-in is completed, a configuration file "plugin-descriptor.properties" is added. Information to be configured is as follows:
①description: description information on a plug-in, which describes a function of the plug-in;
②version: version information of the plug-in;
③name: the name of the plug-in displayed in a elasticsearch plugin;
④classname: an entrance of the plug-in, to realize an interface of Iplugin;
⑤java.version: version information of java used by the plug-in; and
⑥ elasticsearch.version: the plug-in released on the particular version of ElasticSearch.

Step 2: After the file is generated, the properties file and ajar package are placed in a folder named ElasticSearch, and then the folder named ElasticSearch is compressed into a zip file so as to complete a process of packing the plug-in.

Step 3.The ElasticSearch customizes plug-in deployment and executes a command "elasticsearch-plugin install" to install the plug-in.

At S104, a desensitizing operation is performed to the data records on the basis of the desensitization policy so as to generate a desensitized search result. Not all of the data records that meet the criteria searched by the search engine are sensitive information. Therefore, when the desensitization operation is performed, the method may, for example, include: determining content to be desensitized in the data records; and performing a desensitization conversion to the content to be desensitized in the data records, according to a desensitization rule in the desensitization policy, to generate a desensitized search result. In this process, determining content to be desensitized in the data records means determining the sensitive information therein. Exemplarily, the sensitive information may be determined by keyword querying, characteristic information analysis, or the like. As to performing a desensitization conversion to the content to be desensitized in the data records according to a desensitization rule in the desensitization policy, the corresponding desensitization policy can be determined by referring to the identity information of the client terminal that initiates the data search request, so as to perform the desensitization conversion according to the desensitization rule in the desensitization policy. Here, the conversion process may be directly performed one by one on the basis of the searched data records, or the desensitization conversion may be performed in a distributed manner by respective processing nodes.

Exemplarily, configuration of the desensitization policy is implemented by extending an authorization model of the search engine.

```
    An authorization command of Solr is as follows.
     "authorization": {
     "class" :"solr.RuleBasedAuthorizationPlugin",
     "user-role": { "solr" : "admin" },
     "permissions": [{ "name":"security-edit",
     "role": "admin"}]
     }
```

A control item "masking _rule" is added to represent the desensitization policy, and the format is, for example,

```
     "masking_rule":{masking_function:masking_parameters},
```

in which "masking _rule" is the name of a desensitization policy algorithm set for this resource, and "masking_parameters" is a list of actual parameters for the desensitization policy algorithm.

Similarly, by extending an authorization model of ElasticSearch, the control item as above-described is added so as to set the desensitization policy.

By using this mode, fine-grained resource authorization and fine-grained desensitization policy configuration can be both realized, and different desensitization policies can be configured for users with different identities.

The search engine in the present embodiment includes, but is not limited to, the engine Solr and the engine ElasticSearch, and all other search engines may implement a function of configuration for data desensitization policy according to the above flow.

At S105, the search result is sent to the client terminal. After the search result is sent to the client terminal, the current data search request is ended. The search result sent to the client terminal is sent by the master node, and the sensitive information in the search result has been desensitized, so that information security can be ensured.

The present embodiment provides a data desensitizing method, which includes: receiving, by a server, a data search request initiated by a client terminal; searching for data records meeting criteria on the basis of the data search request; determining a desensitization policy by means of an inbuilt desensitization plug-in; performing a desensitizing operation to the data records on the basis of the desensitization policy so as to generate a desensitized search result; and sending the search result to the client terminal. By implementation of the present disclosure, desensitization of data is realized by using a desensitization plug-in in a search engine server, so that software and hardware costs can be reduced and a system response time can be reduced as well.

### Second Embodiment

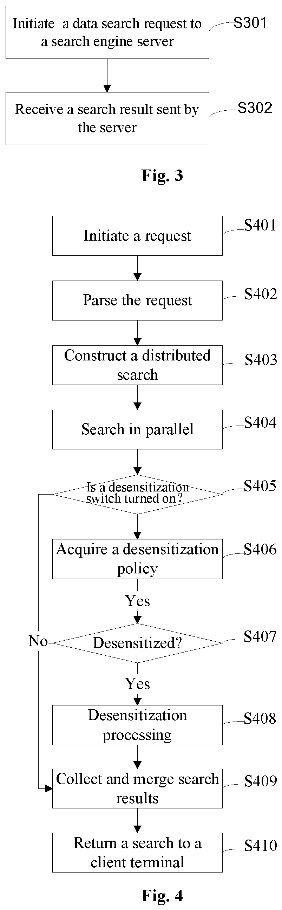

Referring to Fig. 3, and Fig. 3 shows a flowchart of a data desensitizing method according to a second embodiment of the present disclosure. The method includes:
S301: initiating, by a client terminal, a data search request to a search engine server; and
S302: receiving, by the client terminal, a search result sent by the server.

At S301, a client terminal initiates a data search request to a search engine server. A data search request initiated by a client terminal may, for example, include a data search request to a search engine server directly initiated by an application, a program, a command, or a script at the client terminal of the search engine, and subsequently requirements of the client terminal are processed directly by the search engine server. For a current data search request, a search engine node that receives the data search request from the client terminal serves as a master node of the current data search request.

At S302, a search result sent by the server is received. A search result sent by the server may, for example, include a desensitized search result, which is generated in the following manner: searching for data records meeting criteria on the basis of the data search request; determining a desensitization policy by means of an inbuilt desensitization plug-in; and performing a desensitizing operation to the data records on the basis of the desensitization policy.

Alternatively, the step of searching for data records meeting criteria on the basis of the data search request may, for example, include: parsing the data search request and determining index sharding information; creating a distributed search task on the basis of the index sharding information; performing a parallel search according to a distributed search task. A data search request initiated by a user may include a large amount of data, and object content searched by the search engine server may include a larger amount of data. In order to improve the search efficiency, the index sharding information may be determined by parsing the data search request, and then a distributed search task is constructed on the basis of the index sharding information. The so-called distributed search task means dividing a problem, which may be solved by involving a large amount of computing power, into a number of small parts, then allocating these parts to a number of computers for processing, and finally integrating these calculation results to obtain a final result.

Alternatively, the data search request may further include identity information corresponding to the client terminal. In this case, the step of determining a desensitization policy by means of an inbuilt desensitization plug-in may, for example, include invoking an interface of the desensitization plug-in according to the identity information so as to acquire a desensitization policy corresponding to the identity information. In the present embodiment, different desensitization policies may be adopted for different users. For instance, when granularity controlled by the desensitization policy is at a level of field, different desensitization rules may be set according to an authority level of a user. For example, for the field of the identity card, a rule of desensitizing the last four digits may be set for a user with a high authority level, while a rule of desensitizing the entirety may be set for a user with a low authority level; and for the field of the telephone number, a rule of desensitizing the middle four digits may be set for the user with a high authority level, while a rule of desensitizing the entirety may be set for the user with a low authority level. By providing various desensitizing policies, security of the sensitive information can be further improved to a certain extent, and leakage of the sensitive information can be avoided.

Alternatively, setting of the desensitization plug-in may be performed through a configuration file. Exemplarily, before a desensitization request initiated by the client terminal is received, configuring a desensitization plug-in through a configuration file and placing the desensitization plug-in in a corresponding execution environment may further be included.

When the desensitization operation is performed, the method may, for example, include: determining content to be desensitized in the data records; and performing a desensitization conversion to the content to be desensitized in the data records, according to a desensitization rule in the desensitization policy, to generate a desensitized search result. In this process, determining content to be desensitized in the data records means determining the sensitive information therein. Exemplarily, the sensitive information may be determined by keyword querying, characteristic information analysis, or the like. As to performing a desensitization conversion to the content to be desensitized in the data records according to a desensitization rule in the desensitization policy, the corresponding desensitization policy can be determined by referring to the identity information of the client terminal that initiates the data search request, so as to perform the desensitization conversion according to the desensitization rule in the desensitization policy. Here, the conversion process may be directly performed one by one on the basis of the searched data records, or the desensitization conversion may be performed in a distributed manner by respective processing nodes.

The present embodiment provides a data desensitizing method, which includes: initiating, by a client terminal, a data search request to a server; and receiving, by the client terminal, a search result sent by the server. By implementation of the present disclosure, desensitization of data is realized by using a desensitization plug-in in a search engine server, so that software and hardware costs can be reduced and a system response time can be reduced as well.

### Third Embodiment

Referring to Fig. 4, and Fig. 4 shows a flowchart of a data desensitizing method as an example according to a third embodiment of the present disclosure , in which the search engine Solr is used to execute the data desensitizing process. The method includes the following steps.

At S401, an application, a program, a command, or a script at a client terminal of the search engine Solr directly initiates a data search request to a Solr engine server. Identity information of a visitor, for example, identity fields such a username, may be carried in a requesting message format of the client terminal. The request of the client terminal is sent to any search engine node containing a data index set, and a search engine node receiving the request of the client terminal serves as a master node 300 of a current request.

For the data search request in the present embodiment, it does not need an intermediate device such as a desensitization server, and the client terminal may directly initiate an access request to the search engine server.

At S402, the master node 300 first parses the data search request, and acquires corresponding index sharding information for query type information therein.

At S403, the master node 300 acquires the index sharding information, constructs a corresponding distributed search task according to the index sharding information, and schedules processing nodes 400 corresponding to the shards to search for data records meeting criteria in parallel.

At S404, each processing node 400 determines a current data search scope according to the index sharding information, and searches for the data records meeting criteria.

At S405, the processing node 400 determines whether a desensitization function switch in the system is turned on when or after a shard search is performed. If the desensitization function switch is turned on, the process enters S406, and otherwise the process enters S409.

At S406, the processing node 400 invokes an interface of a desensitization plug-in to acquire a desensitization policy corresponding to a user of the current request.

At S407, after the policy is acquired, the processing node 400 obtains a user group to which a user belongs and role information according to a username of the user in the current request, and matches the desensitization policy of the user by means of the username, the user group, and the role information in combination with resources of the current request such as documents, fields and so on, and determines whether desensitization processing is necessary for a result. If the desensitization processing is necessary, the process enters S408, and otherwise the process enters S409.

At S408, a desensitization conversion is performed to the data records in S404 one by one according to a desensitization rule in the desensitization policy acquired in S406 to generate a desensitized search result.

At S409, the master node 300 of the current data search request collects search results returned by the processing nodes 400 of all shards, and performs merging, scoring and sorting.

At S410, the master node 300 encapsulates search results and returns them to the client terminal.

Accordingly, desensitized search result data in the present embodiment is directly returned to the client terminal without transfer through a desensitized server.

In the above steps, S404 to S408 are executed in parallel by a plurality of processing nodes 400.

The search engine related to in the data search method of the present embodiment includes, but is not limited to, the engine Solr and the engine ElasticSearch, and other search engines may implement data desensitization according to the above-described flow.

### Fourth Embodiment

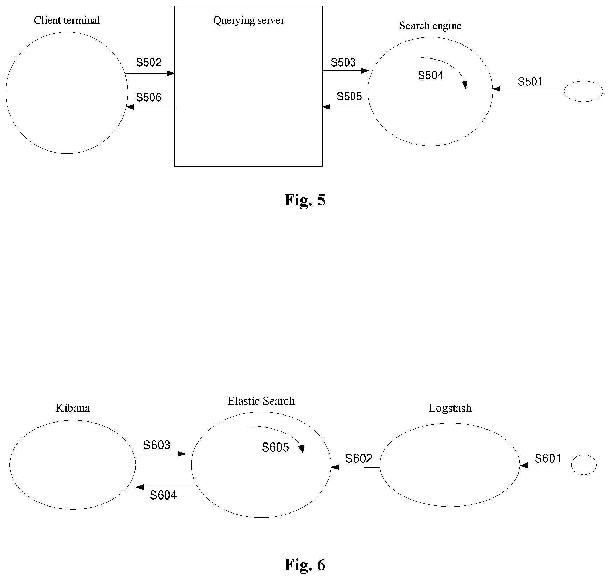

Running logs, security logs and other things of a system may be stored in a search engine such as Solr or ElasticSearch, and the log data includes a large amount of sensitive information, such as a user ID number, a bank card number and the like, in a query condition. Once the information is exposed, a security hazard is caused. The present embodiment illustrates a process of performing data desensitization by using a system in which a search engine stores log data, as shown in Fig. 5.

At S501, the cluster administrator sets a desensitization policy of the search engine according to security requirements, and sets different desensitization rules for different types of logs. For example, for the SQL class log, a full desensitization rule is adopted for a low-authority user. That is, all SQL statements are replaced with a fixed string, or sensitive fields in a *where* condition therein are replaced with special characters. For IP address of the client terminal of an access user, a partial-display desensitization rule or the like may be adopted for the low-authority user, so that users/user groups/roles with different identities may view different desensitized logs.

At S502, the user initiates a data search request related to log querying via an interface of a log querying client terminal.

At S503, a querying server receives the data search request from the user and converts the request into a Solr request.

At S504, the Solr search engine obtains user information according to the user information carried in the current data search request and matches the desensitization policy of the user by means of the user information in combination with resources requested this time such as documents and fields, and determines whether desensitization processing to a result is necessary. If desensitization processing to a result is necessary, a desensitization conversion is performed to data one by one according to a desensitization rule in the desensitization policy acquired to ensure that users with different identities view different log information.

At S505, the search engine Solr encapsulates a desensitized search result and returns it to the querying server.

At S506, the querying server acquires the desensitized search result of a Solr server terminal and sends the desensitized search result to the client terminal for display.

The search engine of the present embodiment includes, but is not limited to, the search engine Solr and the search engine ElasticSearch.

ELK (ElasticSearch, Logstash, Kibana) may be used to build a real-time log analysis platform. Elasticsearch is an open-source distributed search engine, and has the following features: distribution, zero configuration, automatic discovery, automatic shard-division for index, index replica mechanism, restful style interface, multiple data sources, automatic search load, and the like; Logstash is a fully open-source tool that can collect, analyze and store logs for later use; and Kibana is an open-source and free tool that provides a log analysis-friendly web interface for Logstash and ElasticSearch so as to help to summarize, analyze, and search important data logs. On the basis of functions of the components, the ELK can collect, store and retrieve big data cluster logs, and then logs of interest to the user are quickly viewed through query conditions such as keywords or log types. It is prohibited that the log query records include sensitive information of business, so as to avoid leakage of sensitive data of business due to log analysis. By the implementation of the present embodiment, sensitive data in the logs can be protected, as shown in Fig. 6.

At S601, the administrator sets a desensitization policy of the search engine ElasticSearch according to security requirements, and sets different desensitization rules for different types of logs. For example, for the SQL class log, a full desensitization rule is adopted for a low-authority user. That is, all SQL statements are replaced with a fixed string, or sensitive fields in a *where* condition therein are replaced with special characters. For IP address of the client terminal of an access user, a partial-display desensitization rule or the like may be adopted for the low-authority user, so that users/user groups/roles with different identities may view different desensitized logs.

At S602, LogStash tools collect running logs of a big data cluster and write the logs into the search engine server of ElasticSearch, including running logs of the cluster.

At S603, the user initiates a querying request for big data cluster logs via a Kibana interface.

At S604, the search engine ElasticSearch searches logs meeting query conditions, desensitizes the logs according to a desensitization rule for the user, and finally encapsulates desensitized result data and return it to the Kibana.

At S605, the client terminal acquires the data desensitized by the server terminal of ElasticSearch and displays the data, and users with different identities view different log information.

### Fifth embodiment

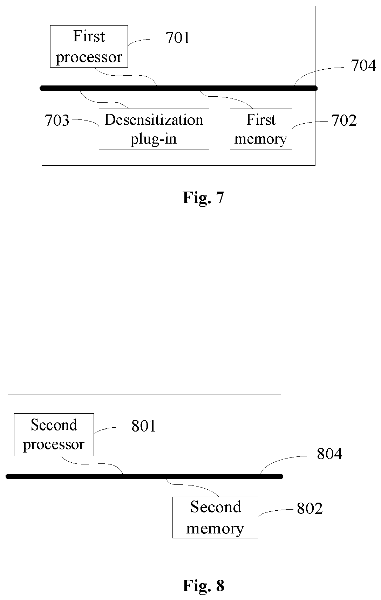

Referring to Fig. 7, and Fig. 7 is a schematic diagram of components of a server according to a fifth embodiment of the present disclosure. The server includes: a first processor 701, a first memory 702, a desensitization plug-in 703, and a first communication bus 704. The first communication bus 704 is configured to realize communication connection among the first processor 701, the first memory 702, and the desensitization plug-in 703. The first processor 701 is configured to execute a data desensitization program stored in the first memory 702 so as to implement the data desensitizing method in the foregoing embodiments, and details are not described herein.

Referring to Fig. 8, Fig. 8 is a schematic diagram of components of a terminal according to a fifth embodiment of the present disclosure. The terminal includes: a second processor 801, a second memory 802, and a second communication bus 804. The second communication bus 804 is configured to realize communication connection between the second processor 801 and the second memory 802. The second processor 801 is configured to execute a data desensitization program stored in the second memory 802 so as to implement the data desensitizing method in the foregoing embodiments, and details are not described herein.

In addition, the present embodiment further provides a computer-readable storage medium. One or more computer programs are stored in the computer-readable storage medium, and the one or more computer programs are executable by one or more processors so as to implement the foregoing data desensitizing method, and details are not described herein.

Obviously, those skilled in the art should understand that modules or steps of the present disclosure described above may be implemented with a general purpose computing device. They may be concentrated on a single computing device, or distributed over a network formed by a plurality of computing devices. Alternatively, they may be implemented with program codes executable by the computing device, so that they may be stored in a storage medium (ROM/RAM, magnetic disk, optical disk) and executed by the computing device. In some cases, the illustrated or described steps may be performed in an order different from the order herein; or they may be respectively fabricated as separate integrated circuit modules; or a plurality of modules or steps thereof may be fabricated as a single integrated circuit module for implementation. Therefore, the present disclosure is not limited to any particular combination of hardware and software.

The foregoing content is a further detailed description of the present disclosure in combination with specific embodiments, and it cannot be considered that specific embodiments of the present disclosure are limited to these descriptions only. For those of ordinary skill in the art to which the present disclosure belongs, several simple inferences or substitutions may be made without departing from the idea of the present disclosure, all of which are deemed to fall within the scope of the present disclosure.

### Industrial Applicability

According to the data desensitizing solution provided in the present disclosure, for solving the problems of high software and hardware costs and long response time of a search engine data desensitizing process in related technologies, desensitization of data is realized by using a desensitization plug-in in a search engine server, thereby reducing software and hardware costs and reducing a system response time as well.

## Claims

1. A data desensitizing method, comprising:
receiving by a search engine server (S401) a data search request initiated by a user of a client terminal;
searching by a plurality of processing nodes (S404) for data records meeting criteria on the basis of the data search request;
by each of the plurality of processing nodes, determining that a desensitization function switch in the system is turned on when or after a shard search is performed (S405) and determining (S406) a desensitization policy by means of a desensitization plug-in built into the search engine server;
by each of the plurality of processing nodes, matching the determined desensitization policy to the user and determining that desensitization processing is necessary for a result (S407), and performing (S408) a desensitizing operation to the data records on the basis of the desensitization policy so as to generate a desensitized search result; collecting by the search engine server (S409) the desensitized search result returned by each of the processing nodes; and
sending by the search engine server (S410) the collected search result to the client terminal; wherein
searching by the plurality of processing nodes for data records meeting criteria on the basis of the data search request includes:
parsing by the search engine server (S402) the data search request and determining by the parsing index sharding information;
creating by the search engine server (S403) a distributed search task for the plurality of processing nodes on the basis of the index sharding information; and
performing by the plurality of processing nodes (S404) a parallel shard search according to the distributed search task; wherein performing the parallel shard search according to the distributed search task includes
by each of the plurality of processing nodes, determining (S404) a current data search scope according to the index sharding information and searching for records meeting criteria.

2. The data desensitizing method according to claim 1, wherein the data search request further comprises identity information corresponding to the client terminal; and determining the desensitization policy by means of the desensitization plug-in built into the search engine server comprises:
invoking an interface of the desensitization plug-in according to the identity information so as to acquire the desensitization policy corresponding to the identity information.

3. The data desensitizing method according to any of claims 1-2, wherein performing the desensitizing operation to the data records comprises:
determining content to be desensitized in the data records; and
performing a desensitization conversion to the content to be desensitized in the data records, according to a desensitization rule in the desensitization policy, to generate the desensitized search result.

4. The data desensitizing method according to claim 3, wherein before a desensitization request initiated by the client terminal is received, the method further comprises:
configuring the desensitization plug-in through a configuration file; and
placing the desensitization plug-in in a corresponding execution environment.

5. An engine search server and a plurality of processing nodes, the server and each of the nodes comprising: a first processor (701), a first memory (702), the engine search server comprising additionally a desensitization plug-in (703), and a first communication bus (704); the first communication bus (704) is configured to realize communication connection among the first processor (701), the first memory (702), and in the engine search server also the desensitization plug-in (703); and
the first processor (701) is configured to execute a data desensitization program stored in the first memory (702) so as to implement the corresponding steps of the data desensitizing method according to any of claims 1-4.

6. A computer-readable storage medium, wherein one or more computer programs are stored in the computer-readable storage medium, and the one or more computer programs are executable by one or more processors so as to implement steps of the data desensitizing method according to any of claims 1-4.

## Patentansprüche

1. Datendesensibilisierungsverfahren, umfassend:
Empfangen, durch einen Suchmaschinenserver (S401), einer durch einen Benutzer eines Client-Endgeräts initiierten Datensuchanforderung;
Suchen, durch eine Vielzahl von Verarbeitungsknoten (S404), nach Datensätzen, die Kriterien auf der Basis der Datensuchanforderung erfüllen;
durch jeden der Vielzahl von Verarbeitungsknoten Bestimmen, dass ein Desensibilisierung-Funktionsschalter in dem System eingeschaltet ist, wenn oder nachdem eine Shard-Suche durchgeführt wird (S405), und Bestimmen (S406) einer Desensibilisierungsrichtlinie mittels einer in den Suchmaschinenserver eingebauten Desensibilisierungserweiterung;
durch jeden der Vielzahl von Verarbeitungsknoten Abgleichen der bestimmten Desensibilisierungsrichtlinie mit dem Benutzer und Bestimmen, dass Desensibilisierungsverarbeitung für ein Ergebnis erforderlich ist (S407), und Durchführen (S408) einer Desensibilisierungsoperation an den Datensätzen auf der Basis der Desensibilisierungsrichtlinie, um ein desensibilisiertes Suchergebnis zu erzeugen; Erfassen, durch den Suchmaschinenserver (S409), des durch jeden der Verarbeitungsknoten zurückgegebenen desensibilisierten Suchergebnisses; und
Senden, durch den Suchmaschinenserver (S410), des erfassten Suchergebnisses an das Client-Endgerät; wobei Suchen, durch die Vielzahl von Verarbeitungsknoten, nach Datensätzen, die Kriterien auf der Basis der Datensuchanforderung erfüllen, enthält:
Zergliedern, durch den Suchmaschinenserver (S402), der Datensuchanforderung und Bestimmen, durch das Zergliedern, von Index-Sharding-Informationen;
Erzeugen, durch den Suchmaschinenserver (S403), einer verteilten Suchaufgabe für die Vielzahl von Verarbeitungsknoten auf der Basis der Index-Sharding-Informationen; und
Durchführen, durch die Vielzahl von Verarbeitungsknoten (S404), einer parallelen Shard-Suche gemäß der verteilten Suchaufgabe; wobei Durchführen der parallelen Shard-Suche gemäß der verteilten Suchaufgabe enthält:
durch jeden der Vielzahl von Verarbeitungsknoten Bestimmen (S404) eines gegenwärtigen Datensuchumfangs gemäß den Index-Sharding-Informationen und Suchen nach Datensätzen, die Kriterien erfüllen.

2. Datendesensibilisierungsverfahren nach Anspruch 1, wobei die Datensuchanforderung ferner mit dem Client-Endgerät korrespondierende Identitätsinformationen umfasst; und
Bestimmen der Desensibilisierungsrichtlinie mittels der in den Suchmaschinenserver eingebauten Desensibilisierungserweiterung umfasst:
Aufrufen einer Schnittstelle der Desensibilisierungserweiterung gemäß den Identitätsinformationen, um die mit den Identitätsinformationen korrespondierende Desensibilisierungsrichtlinie zu erfassen.

3. Datendesensibilisierungsverfahren nach einem der Ansprüche 1-2, wobei Durchführen der Desensibilisierungsoperation an den Datensätzen umfasst:
Bestimmen von Inhalt, der desensibilisiert werden soll, in den Datensätzen; und
Durchführen einer Desensibilisierungsumwandlung an dem Inhalt, der desensibilisiert werden soll, in den Datensätzen gemäß einer Desensibilisierungsregel in der Desensibilisierungsrichtlinie, um das desensibilisierte Suchergebnis zu erzeugen.

4. Datendesensibilisierungsverfahren nach Anspruch 3, wobei das Verfahren, bevor eine durch das Client-Endgerät initiierte Desensibilisierungsanforderung empfangen wird, ferner umfasst:
Konfigurieren der Desensibilisierungserweiterung durch eine Konfigurationsdatei; und
Platzieren der Desensibilisierungserweiterung in eine korrespondierende Ausführungsumgebung.

5. Maschinensuchserver und eine Vielzahl von Verarbeitungsknoten, der Server und jeder der Knoten umfassend: einen ersten Prozessor (701), einen ersten Speicher (702), der Maschinensuchserver umfassend zusätzlich eine Desensibilisierungserweiterung (703) und einen ersten Kommunikationsbus (704); wobei der erste Kommunikationsbus (704) konfiguriert ist, eine Kommunikationsverbindung zwischen dem ersten Prozessor (701), dem ersten Speicher (702) und in dem Maschinensuchserver außerdem der Desensibilisierungserweiterung (703) zu realisieren; und
der erste Prozessor (701) konfiguriert ist zum Ausführen eines in dem ersten Speicher (702) gespeicherten Datendesensibilisierungsprogramms, um die korrespondierenden Schritte des Datendesensibilisierungsverfahrens nach einem der Ansprüche 1-4 zu implementieren.

6. Computerlesbares Speichermedium, wobei ein oder mehrere Computerprogramme in dem computerlesbaren Speichermedium gespeichert sind und das eine oder die mehreren Computerprogramme durch einen oder mehrere Prozessoren ausgeführt werden, um Schritte des Datendesensibilisierungsverfahrens nach einem der Ansprüche 1-4 zu implementieren.

## Revendications

1. Procédé de désensibilisation de données comprenant :
la réception par un serveur de moteur de recherche (S401) d'une demande de recherche de données lancée par un utilisateur d'un terminal client ;
la recherche par une pluralité de noeuds de traitement (S404) d'enregistrements de données répondant à des critères en se basant sur la demande de recherche de données ;
la détermination, par chacun de la pluralité de noeuds de traitement, qu'une commutation de fonction de désensibilisation dans le système est exécutée lorsque ou après qu'une recherche de fragmentation a été exécutée (S405) et la détermination (S406) d'une politique de désensibilisation au moyen d'un module d'extension de désensibilisation incorporé dans le serveur de moteur de recherche ; l'appariement, par chacun de la pluralité de noeuds de traitement, de la politique de désensibilisation déterminée avec l'utilisateur et la détermination que le traitement de désensibilisation est nécessaire pour un résultat (S407), et l'exécution (S408) d'une opération de désensibilisation sur les enregistrements de données en se basant sur la politique de désensibilisation afin de générer un résultat de recherche désensibilisé ;
la collecte par le serveur de moteur de recherche (S409) du résultat de recherche désensibilisé renvoyé par chacun des noeuds de traitement ; et
l'envoi par le serveur de moteur de recherche (S410) du résultat de recherche recueilli au terminal client ;
la recherche, par la pluralité de noeuds de traitement, d'enregistrements de données répondant à des critères en se basant sur la demande de recherche de données comprenant :
l'analyse syntaxique par le serveur de moteur de recherche (S402) de la demande de recherche de données et la détermination, par l'analyse syntaxique, d'informations de fragmentation d'index ;
la création par le serveur de moteur de recherche (S403) d'une tâche de recherche distribuée pour la pluralité de noeuds de traitement en se basant sur les informations de fragmentation d'index ; et
l'exécution par la pluralité de noeuds de traitement (S404) d'une recherche de fragments en parallèle conformément à la tâche de recherche distribuée ;
l'exécution de la recherche de fragments en parallèle conformément à la tâche de recherche distribuée comprenant :
la détermination par chacun de la pluralité de noeuds de traitement (S404) d'une étendue de recherche de données courante conformément aux informations de fragmentation d'index et la recherche d'enregistrements répondant aux critères.

2. Procédé de désensibilisation de données selon la revendication 1, dans lequel la demande de recherche de données comprend en outre des informations d'identité correspondant au terminal client ; et dans lequel
la détermination de la politique de désensibilisation au moyen du module d'extension de désensibilisation incorporé dans le serveur de moteur de recherche comprend :
l'appel à une interface du module d'extension de désensibilisation conformément à aux informations d'identité afin d'acquérir la politique de désensibilisation correspondant aux informations d'identité.

3. Procédé de désensibilisation de données selon l'une quelconque des revendications 1 à 2, dans lequel l'exécution de l'opération de désensibilisation sur les enregistrements de données comprend :
la détermination du contenu devant être désensibilisé dans les enregistrements de données ; et
l'exécution d'une conversion de désensibilisation sur le contenu devant être désensibilisé dans les enregistrements de données, conformément à une règle de désensibilisation dans la politique de désensibilisation, afin de générer le résultat de recherche désensibilisé.

4. Procédé de désensibilisation de données selon la revendication 3, ce procédé comprenant, avant qu'une demande de désensibilisation lancée par le terminal client ne soit reçue :
la configuration du module d'extension de désensibilisation au moyen d'un fichier de configuration ; et
le placement du module d'extension de désensibilisation dans un environnement d'exécution correspondant.

5. Serveur de recherche de moteur et pluralité de noeuds de traitement, ce serveur et chacun de ces noeuds comprenant : un premier processeur (701), une première mémoire (702), le serveur de recherche de moteur comprenant en outre un module d'extension de désensibilisation (703), et un premier bus de communication (704) ; le premier bus de communication (704) étant configuré de façon à réaliser une connexion de communication parmi le premier processeur (701), la première mémoire (702), et aussi, dans le serveur de recherche de moteur, le module d'extension de désensibilisation (703) ; et
le premier processeur (701) étant configuré de façon à exécuter un programme de désensibilisation de données stocké dans la première mémoire (702) afin d'exécuter les étapes correspondantes du procédé de désensibilisation de données selon l'une quelconque des revendications 1 à 4 .

6. Support de stockage lisible par ordinateur, un ou plusieurs programmes informatiques étant stockés sur ce support de stockage lisible par ordinateur, et ce ou ces programmes informatiques étant exécutables par un ou plusieurs processeurs afin d'exécuter les étapes du procédé de désensibilisation de données selon l'une quelconque des revendications 1 à 4.
